# EUROPEAN PATENT SPECIFICATION

(11) **EP 0 367 244 B1**
(45) Date of publication and mention of the grant of the patent: **13.09.1995**
(21) Application number: 89120223.6
(22) Date of filing: 31.10.1989
(51) Int. Cl.: G03B 27/20, G03F 7/20

(54) **Apparatus for exposing an image of an original film on a photosensitive material in vacuum contact with the original film, and method therefor**
Gerät zur Vakuumkontaktbelichtung eines Originalfilmbildes auf einem photoempfindlichem Material und Verfahren dazu
Dispositif d'exposition par contact et par le vide d'une image d'un film original sur un matériau photosensible et méthode associée

(30) Priority: 31.10.1988 JP 276568/88; 12.12.1988 JP 160449/88; 29.06.1989 JP 169263/89
(43) Date of publication of application: 09.05.1990
(73) Proprietor: Dainippon Screen Mfg. Co., Ltd., Kamikyo-ku Kyoto 602 (JP)
(72) Inventor: Nanri, Seiji c/o Dainippon Screen Mfg. Co., Ltd., Hikone-shi Shiga-ken (JP); Ueno, Masatoshi c/o Dainippon Screen Mfg. Co., Ltd, Hikone-shi Shiga-ken (JP); Ohno, Takashi c/o Dainippon Screen Mfg. Co., Ltd., Hikone-shi Shiga-ken (JP)
(74) Representative: Goddar, Heinz J., Dr.

(56) References cited:
- DE-A- 3 103 739
- US-A- 4 248 531
- US-A- 4 316 669

## Description

### Field of the Invention

The present invention relates to an apparatus used in the graphic arts such as a photomechanical process, for forming an image of an original film by exposure on a photosensitive material such as a photosensitive film or a presensitized plate in vacuum contact with the original film, and a method therefor, as known from US-A-4 316 669).

Apparatus of the above mentioned type include vacuum contact printing apparatus. A vacuum contact printing apparatus comprises a transparent plate, an elastic sheet for airtightness, in vacuum contact with the transparent plate, a squeegee roller which rolls on the back surface of the elastic sheet, and a vacuum pump for removing the air between the transparent plate and the elastic sheet to provide a vacuum. The squeegee roller is used to expell the air from between the transparent plate and the elastic sheet by pressing the elastic sheet so that the air can be completely removed. The purpose of removing the air from between the transparent plate and the elastic sheet is to make a reliable contact between the original film and the photosensitive material placed thereon. The reliable contact enables a pattern on the original film to be printed faithfully and clearly on the photosensitive material.

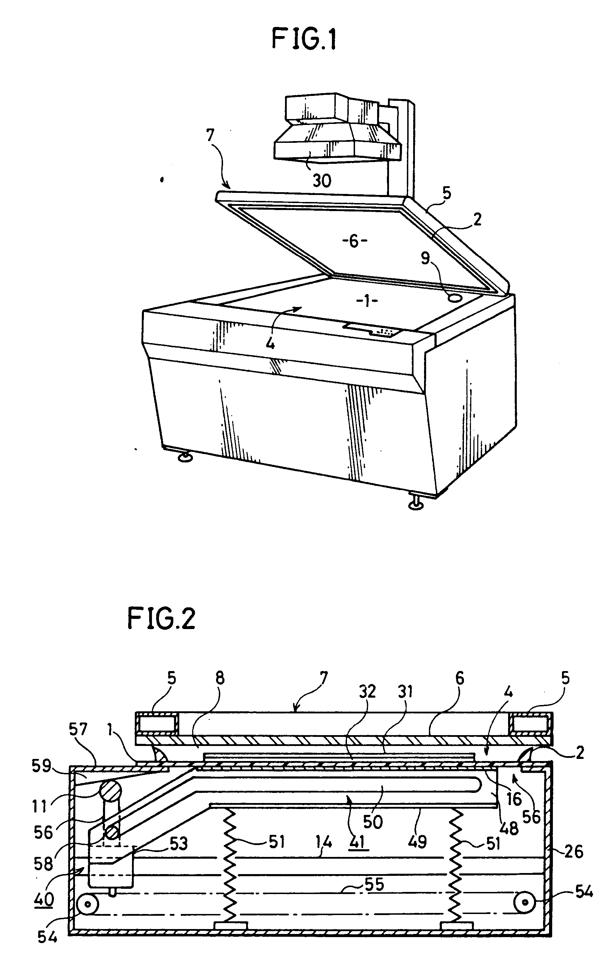

A vacuum contact printing apparatus of interest to the present invention is disclosed in Japanese Utility Model Publication No. JP-Y2-56-5095. This apparatus was proposed by the assignee company of the present application. Referring to Figs. 1 to 3, the conventional vacuum contact printing apparatus comprises: a table 4 for printing, having a lower frame provided with an elastic rubber sheet 1 with an air outlet 9, and an airtight seal 2 formed to surround the rubber sheet 1; an upper frame 7 provided openably and closably with respect to the table 4, and having an edge frame 5 and a transparent plate 6 provided on the lower surface of the edge frame 5; a squeegee roller 11 for accelerating removal of the air from the space defined by the transparent plate 6, the rubber sheet 1 and the airtight seal 2; and a squeegee roller drive unit 40 for driving the squeegee roller 11. This apparatus further comprises evacuation means, not shown, for removing the air through the air outlet 9.

In the apparatus of the above described type, an original film and a photosensitive material are placed on the rubber sheet 1 and a transparent plate 6 is placed thereon. In order to prevent the rubber sheet 1 from being deformed downward due to the weight of the original film or the photosensitive film, the apparatus of this type further comprises a rubber sheet support unit 41 for supporting the rubber sheet 1 from below when the original film and the photosensitive material are placed on the rubber sheet 1.

The rubber sheet support unit 41 comprises: a support plate 16 provided in a vertically movable manner, contacting the lower surface of the rubber sheet 1 in its uppermost position; a pair of guide plates 48 fixed to the support plate 16 in juxtaposed relationship with each other in a direction perpendicular to the plane of the drawing to extend downward from both ends of the support plate 16, and having respective front end portions bending downward obliquely; a contact member 49 provided on the lower end of each guide plate 48; and compression coil springs 51 provided between the lower surface of a base frame 26 and each contact member 49, for biasing upward the corresponding guide plate 48.

In the central portion of each guide plate 48 is a guide groove 50 formed with bend similar to the form of the guide plate 48. The rubber sheet support unit 41 further includes a contact member, not shown, for stably setting the support plate 16 in alignment with the upper surface of the base frame 26.

The squeegee roller drive unit 40 comprises: a pair of guide rails 14 provided on the right and left sides of a lower portion of the base frame 26 in juxtaposed relationship with each other in a direction perpendicular to the plane of the drawing and extending in the back-and-forth direction of the base frame 26; sliding tables 53 which slide along the guide rails 14; roller support arms 56 provided on the respective sliding tables 53, for rotatably supporting the squeegee roller 11 at their upper ends; a guide roller 58 supported rotatably in an intermediate portion of the roller support arms 56 and having both ends inserted in the guide grooves 50, so as to be coupled to the guide plates 48; a pair of sprockets 54 provided near the front end and the rear end of the base frame 26, under each guide rail 14; an endless chain 55 put on each pair of sprockets 54; and a motor, not shown, for rotating the respective sprockets 54 in synchronization. The lower end of each sliding table 53 is coupled to the corresponding endless chain 55. A triangular guide member 59 is provided on the lower surface of the front edge 57 of the base frame 26.

Referring to Figs. 1 to 3, operation of the conventional apparatus will be described. At the beginning of the operation, the squeegee roller 11 is located at the foremost position in the base frame 26. Since the guide roller 58 is in the front ends of the guide grooves 50, the guide plates 48 are pushed upward by the springs 51. The support plate 16 supports the rubber sheet 1 from below.

The operator opens the upper frame 7 and places an original film 31 and a photosensitive material 32 on the rubber sheet 1. After closing the upper frame 7, the operator presses a start button of an operation panel not shown. The evacuating means, not shown, removes the air in a space 8 defined by the transparent plate 6, the table 4 and the airtight seal 2 through the air outlet 9. The following operation is carried out simultaneously with the removal of the air.

The motor, not shown, rotates in the regular direction to rotate the sprockets 5 in one direction. The endless chain 55 rotates to cause the upper portions thereof to move toward the rear side of the base frame 26.

Since the lower ends of the sliding tables 53 are coupled to the corresponding endless chains 55, the sliding tables 53 move on the corresponding guide rails 14 toward the rear end of the base frame 26. As the guide roller 58 moves together with the sliding tables 53, the higher portions of the guide grooves 50 contact the guide roller 58. Since the vertical position of the guide roller 58 is fixed, the guide plates 48 are pushed downward by the guide roller 58 as the sliding tables 53 moves rearward. The support plate 16 pulled down away from the lower surface of the rubber sheet 1.

The squeegee roller 11 travels substantially at a constant speed while pressing the lower surface of the rubber sheet 1. The air in the space 8 is discharged through the air outlet 9 and the squeegee roller 11 forces the air toward the air outlet 9. Thus, it is considered that the blowhole often left between the original film 31 or the photosensitive material 32 and the rubber sheet 1 can be removed by the pressing force of the squeegee roller 11.

When the air is sufficiently removed, exposure is carried out. After the exposure is completed, the squeegee roller 11 is returned to the initial position according to procedures opposite to those before the exposure. In this case, however, the squeegee roller 11 does not necessarily need to press the lower surface of the rubber sheet 1. When the squeegee roller 11 is returned to the initial position, the guide plates 48 and the support plate 16 are pushed upward by the upward biasing force of the springs 51, to support the lower surface of the rubber sheet 1.

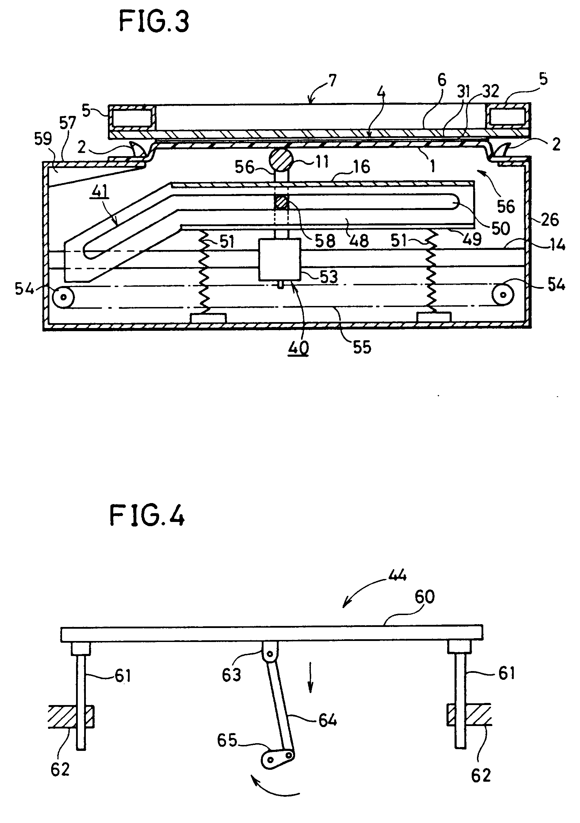

Referring to Fig. 4, another rubber sheet support unit 44 will be described in the following. This unit 44 comprises: a rectangular support plate 60; guide shafts 61 provided vertically under the respective corners of the support plate 60; bearings 62 engaging slidably with the corresponding guide shafts 61; a rod 64 coupled rotatably to a bearing 63 provided under the center of the support plate 60; a crank 65 coupled rotatably to the rod 64; and a drive unit, not shown, for rotating the crank 65.

When the crank 65 is rotated by the drive unit, the rod 64 moves downward. Since the support plate 60 is coupled to the rod 64 through the bearing 63, it moves downward. The bearings 62 slidably support the guide shafts 61 so that the support plate 60 can be maintained horizontal. When the crank 65 is rotated in the reverse direction by the drive unit, the support plate 60 can be raised while being maintained horizontal.

In the above described conventional apparatus, the use of the squeegee roller 11 makes it possible to reduce the time required for achieving a vacuum contact compared with the case not using a squeegee roller. However, in order to further improve the function of such an apparatus, it is necessary to solve the following problems.

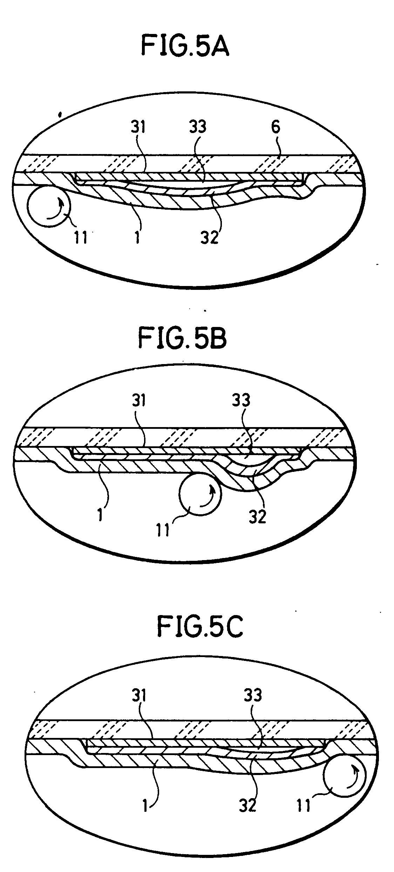

One of the problems is that the time required for completing a necessary vacuum contact in the conventional apparatus could be further reduced. Referring to Fig. 5A, peripheral portions of the rubber sheet 1 contact the transparent plate earlier than the central portion thereof at an initial stage of the operation. This is because the air outlet 9 is provided in a peripheral portion of the rubber sheet 1 and the pressure in peripheral portions of the airtight space 8 is reduced at first. The original film 31 and the photosensitive material 32 are placed normally in a central position on the rubber sheet 1. Accordingly, a blowhole 33 is liable to be formed between the original film 31 and the photosensitive material 32. The squeegee roller 11 advances while pressing on the blowhole 33.

Referring to Fig. 5B, the squeegee roller 11, while travelling, squeezes the blowhole 33 toward the rear edge of the original film 31. However, as described above, vacuum contact has already been in an advanced stage around the portions where the original film 31 and the photosensitive material 32 are placed. Consequently, the air in the blowhole 33 cannot easily move to the peripheral portions. Nevertheless, the squeegee roller 11 continues to move.

Referring to Fig. 5C, between the original film 31 and the photosensitive material 32 is left the partially dissolved blowhole 33 of the air which cannot follow the movement of the squeegee roller 11. In other words, before the air in the blowhole 33 is completely moved, the squeegee roller 11 moves over the blowhole 33 and goes ahead of it.

If the blowhole 33 as shown in Fig. 5C exists, clear exposure cannot be carried out. Therefore, it is necessary to further continue the removal of the air. The squeegee roller 11 no longer serves to promote the removal of the air. In order to carry out a sufficient removal of the air, more of the time is required.

Another problem is that it is not so easy in the conventional apparatus to place the original film 31 and the photosensitive material 32 accurately on the rubber sheet 1.

In the apparatus shown in Figs. 2 and 3, the support plate 16 is supported by the guide plates 48, which are forced upward by the springs 51. In a state in which the support plate 16 contacts the lower surface of the rubber sheet 1, the springs 51 which support the support plate 16 are with a relatively small compression amount. If force is applied to the rubber sheet 1 from above, it is transmitted to the springs 51 through the support plate 16 and the guide plates 48. The springs 51 are compressed with relative ease. As a result, the rubber sheet 1 moves vertically due to a relatively small force. Consequently, it is difficult to carry out stably the work for placing the original film 31 and the photosensitive material 30 on the rubber sheet 1.

Particularly, a high precision is required for positioning in an exposure process in contact printing. In order to carry out the positioning accurately, it is sometimes necessary to place one's hand on the rubber sheet 1. When the photosensitive material or the like is to be fixed on the rubber sheet 1, or when the original film is to be fixed to the photosensitive material placed on the rubber sheet 1, by using an adhesive tape or the like in order to maintain the positioning, it is necessary to apply prescribed pressure to the rubber sheet 1. Since the support plate 16 easily fluctuates vertically, it is not easy to carry out the above mentioned work.

In the apparatus shown in Fig. 4, in order to set the support plate 60 stably, it is necessary to manufacture and to assemble the respective parts with high precision. For this reason, it takes much cost to manufacture the respective parts and, furthermore, the support plate 60 needs to have a higher stiffness than is necessary to support the rubber sheet 1. Consequently, the increase of the cost for manufacturing the entire apparatus cannot be avoided. Moreover, such apparatus has the below described difficulties in structure.

Most of the load applied to the rubber sheet 1 is applied to the crank 65 through the support plate 60 and the rod 64. The support plate 60 is raised or lowered by rotation of the crank 65. In view of the possibilities that the operator may put his hand on the rubber sheet 1 as described above, it is necessary to set the durability of the drive system to a high value. The drive unit is also required to be capable of operating under a higher load. Those facts all result in the increase in the size of the apparatus, lack of the durability and excess production costs.

### SUMMARY OF THE INVENTION

Therefore, an object of the present invention which is defined in claims 1 and 25, is to provide a vacuum contact printing apparatus in which removal of the air is rapidly completed within a reduced time.

The above-described object can be attained by the following construction. A vacuum contact printing apparatus according to the present invention includes: a first unit having a transparent plate and an elastic sheet which define an airtight space when placed one upon another, and holding an original film and a photosensitive material overlapped between the transparent plate and the elastic sheet; and an evacuating unit for removing the air from between the transparent plate and the elastic sheet. The vacuum contact printing apparatus further includes: a squeegee unit which moves on the elastic sheet while pressing the first unit, thereby expelling the air to be removed; a speed changing unit for changing the moving speed of the squeegee unit; and a light source for supplying light to the first unit from the side of the transparent plate. The speed changing unit changes the moving speed of the squeegee unit depending on the ease in movement of the air to be removed. The light source projects light to the photosensitive material for exposure of an image of the original film.

Since the apparatus according to the present invention includes the above described components, the air to be removed is pressed by the squeegee unit which moves at a speed according to the ease of the movement of the air. The squeegee unit does not move faster than the moving speed of the air and it does not move ahead of the air to leave a blowhole behind. In consequence, it is not needed to further carry out removal of the air after the squeezing operation of the squeegee unit. Thus, a vacuum contact printing apparatus can be provided in which it is possible to save an evacuation time after the operation of the squeegee unit and to reduce the time required for the work.

According to a preferred embodiment of the invention, the airtight space is in fluid communication with the evacuating unit through at least one air outlet formed in a predetermined position of the first unit. The squeegee unit moves in a predetermined first direction toward the air outlet so as not to leave a blowhole. Accordingly, the air is forced to move toward the air outlet by the squeegee unit and it is discharged rapidly through the air outlet. Consequently, the evacuation operation can be carried out more rapidly and the time required for the evacuation can be reduced.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a perspective view of a conventional vacuum contact printing apparatus;
Figs. 2 and 3 are sectional views of a conventional apparatus;
Fig. 4 is a schematic view of a main part of the conventional apparatus;
Figs. 5A to 5C are sectional views of a main part of a table of a conventional apparatus;
Fig. 6 is a side sectional view of an apparatus according to the present invention;
Fig. 7 is a schematic perspective view of the apparatus according to the present invention;
Fig. 8 is a perspective view of a rubber sheet support unit;
Fig. 9 is a side view of the rubber sheet support unit;
Fig. 10 is a block diagram of a vacuum contact printing apparatus;
Fig. 11 is a flow chart of a program for controlling the vacuum contact printing apparatus;
Fig. 12 is a schematic perspective view showing a vacuum contact printing apparatus according to the present invention;
Fig. 13 is a perspective view of an upper frame of the apparatus;
Fig. 14 is a flow chart of a main part of a program for controlling the vacuum contact printing apparatus;
Fig. 15 is a block diagram of the vacuum contact printing apparatus; and
Figs. 16 through 18 are schematic sectional views illustrating another embodiment of the invention.

### DESCRIPTION OF THE PREFERRED EMBODIMENTS

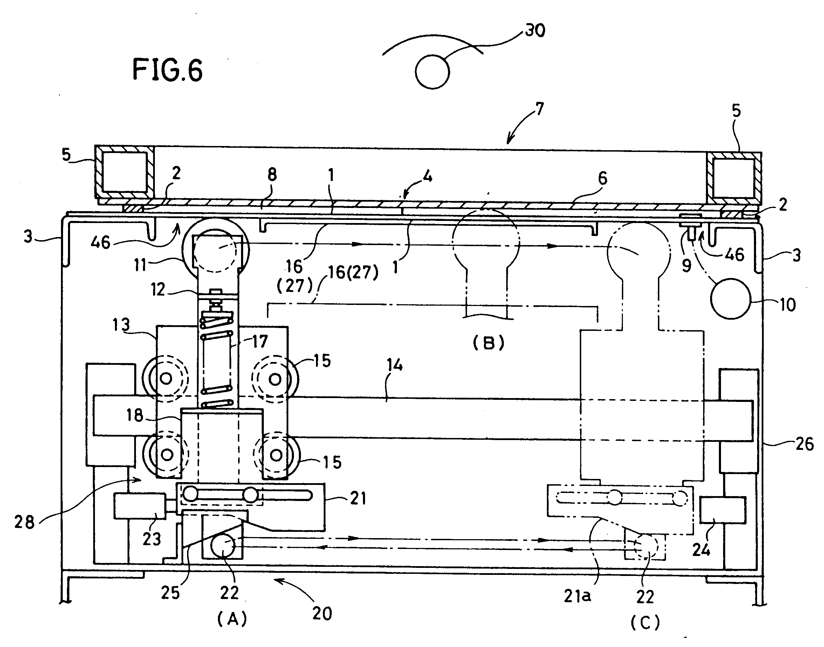

Referring to Figs. 6 to 9, a vacuum contact printing apparatus according to an embodiment of the present invention will be described. The technique for accelerating the close contact, proposed by the present invention is applicable to apparatus of this type, irrespective of whether a light source is provided above or under a photosensitive material. In the apparatus described below, the light source is provided above the photosensitive material; however, this is indicated only by way of example and it should not be taken in a limited sense.

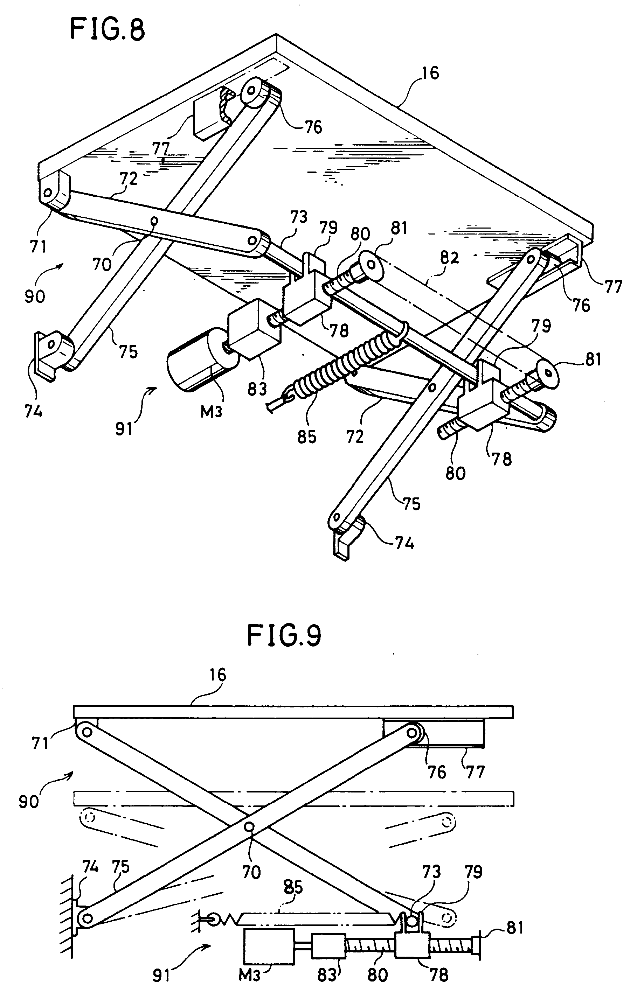

The vacuum contact printing apparatus according to this embodiment comprises: a base frame 26 having an upper frame 3 with openings 46 formed on its upper surface; a table 4 formed on the upper surface of the base frame 26, having an elastic rubber sheet 1 stretched over the openings 46, with an original film 31 and a photosensitive material 32 being placed thereon; an upper frame 7 provided rotatably on the upper surface of the base frame 26, for covering the table 4; a rubber sheet support unit 27 provided in the lower part of the inside of the base frame 26, for supporting the lower surface of the rubber sheet 1; a squeegee roller 11 which travels along the lower surface of the rubber sheet 1 while pressing the same, thereby speeding up the vacuum contact; a squeegee roller drive unit 28 which supports the squeegee roller 11, pressing the lower surface of the rubber sheet 1, and moves the squeegee roller 11 along the lower surface of the rubber sheet 1; an evacuating device 10 such as a vacuum pump for removing the air from within the space defined by the upper frame 7 and the table 4; and a light source 30 provided above the upper frame 7. It is to be noted that in Fig. 6 only the upper end surface of the rubber sheet supporting unit 27 is shown for the simplicity of the drawing. The unit 27 is particularly shown in detail in Figs. 8 and 9.

The table 4 includes an airtight seal 2 formed on the upper surface of the rubber sheet 1 to surround the openings 46. The airtight seal 2 defines an airtight space between the upper frame 7 and the upper surface of the rubber sheet 1 when the upper frame 7 is closed. There is formed, in at least one corner of the rubber sheet 1, an air outlet 9 which communicates with the evacuating device 10.

The upper frame 7 includes a transparent plate 6 covering the table 4 and an edge frame 5 for holding the periphery portion of the transparent plate 6. The edge frame 5 exists only in the peripheral portions of the transparent plate 6 and it does not interrupt the light projected by the light source 30, which reaches the transparent plate 6.

The rubber sheet support unit 27 includes a support plate 16 for supporting a prescribed region at the center of the lower surface of the rubber sheet 1, a support mechanism 90 for supporting the support plate 16 in a vertically movable manner, and a support plate drive unit 91 for driving the support mechanism 90 to raise or lower the support plate 16.

The support mechanism 90 includes: a pair of right and left bearings 71 provided on the lower surfaces of both sides of the front edge portion (on the left lower side in Fig. 8) of the support plate 16; a pair of right and left first arms 72 having respective front ends fitted to the right and left bearings 71; a coupling shaft 73 for coupling the respective rear ends of the first arms 72 in the transverse direction; a pair of right and left bearings 74 provided on the base frame 26 in the portions under the bearings 71; a pair of right and left second arms 75 of the length equal to that of the first arm 72 linked together at their middle points 70 to the middle points of the respective first arms 72 to form X-shaped links; a pair of guide rollers 76 supported in the rear end portions of the second arms 75; and a pair of guide rails 77 provided on the lower surfaces of both sides of the rear edge portion of the support plate 16 along the back-and-forth direction, for guiding the corresponding guide rollers 76 and regulating the separation thereof from the support plate 16.

The support plate drive unit 91 includes: a pair of right and left nuts 78 provided movably in the back-and-forth direction under the coupling shaft 73, each nut 78 having fork portion 79 thereon engaged with the coupling shaft 73; a pair of right and left screw shafts 80 extending along the back-and-forth direction, and being screwed with the respective nuts 78; sprockets 81 provided on the rear end of the respective screw shafts 80; an endless chain 82 put on the sprockets 81, being rotated in synchronization with the right and left screw shafts 80; a motor M3 coupled to one of the screw shafts 80 through a speed reducer 83, being operated to rotate the screw shafts 80 and to move the coupling shaft 73 in the back-and-forth direction; and a spring 85 provided between a middle portion of the coupling shaft 73 and a suitable portion in the frame, for biasing the coupling shaft 73 forward to support the weight of the support plate 16. The height of the coupling shaft 73 is maintained at the same level as that of the bearings 74 to which the front ends of the second arms 75 are coupled.

The squeegee roller drive unit 28 includes: a pair of right and left supports 12 for rotatably supporting the squeegee roller 11 at both ends thereof; running saddles 13 for supporting the respective supports 12 in a vertically movable manner; a pair of right and left guide rails 14 along which the running saddles 13 move, the guide rails 14 being provided in the back-and-forth direction (in the right-and-left direction in Fig. 6) on lower portions of the base frame 26; and a roller elevating mechanism 20 for pressing and spacing the squeegee roller 11 against and from the rubber sheet 1 by railing and lowering the supports 12.

The running saddles 13 include: a guide roller 15 which rolls along the guide rails 14; and a roller support plate 18 fixed to the running saddles 13, for supporting the squeegee roller 11, pressing the same against the lower surface of the rubber sheet 1 through a spring 17.

The roller elevating mechanism 20 includes: plate cams 21 provided movably in the back-and-forth direction with respect to the roller support plate 18; cam followers 22 provided on the lower ends of the supports 12 and engaging with the cam surfaces 21a of the respective plate cams 21; a start point contact portion 23 in a start position A of the squeegee roller 11 shown by the solid line in Fig. 6, for moving the plate cams 21 to the pressing side; an end point contact portion 21 in a movement end position C of the squeegee roller 11 shown by the chain line in Fig. 6, for moving the plate cams 21 to the pressing release side; and start point cam plates 25 for maintaining the release of the pressure to which the cam followers 22 are removed from the cam plates 21 at the return to the start position A.

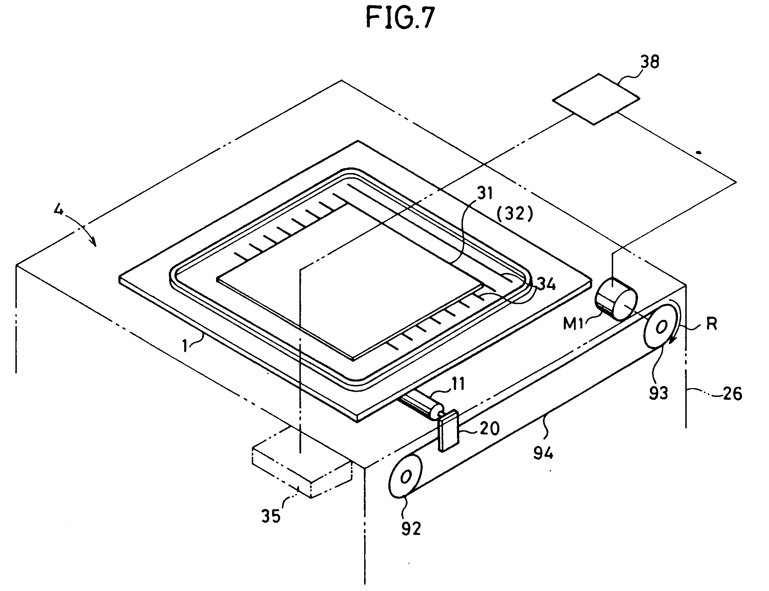

The squeegee roller drive unit 28 further includes the following, with particular reference to Fig. 7: two pairs of sprockets 92, 93 provided near the front end and the rear end on right and left sides on the inner lower portion of the base frame 26: two endless chains 94 put on the two pairs of sprockets 92, 93; a motor M1 for rotating the two sprockets 93 in synchronization; and a motor control circuit 38 for controlling the drive of the motor M1. The lower ends of the roller elevating mechanism 20 are coupled to the corresponding endless chains 94.

The vacuum contact printing apparatus of this embodiment further comprises an operation panel 35 provided on a front end upper portion of the base frame 26. Graduations 34 for reading the rear edge position of the original film and the like are provided on the upper surface of the rubber sheet 1. The operation panel 35 is connected to the motor control circuit 38 and it provides a value corresponding to the graduation indicating the rear edge of the original film to the circuit 38. The circuit 38 defines the condition of running of the squeegee roller 11 based on the inputted value. Thus, the changing condition of the moving speed of the squeegee roller 11 is preset by the circuit 38. Since it is not necessary to strictly control the moving speed of the squeegee roller 11, the graduations 34 may be formed with rough pitches. The graduations 34 do not need to be formed on the rubber sheet 1. For example, the graduation 34 may be formed in a suitable position on the table 4.

In the following, the contacting operation of the vacuum contact printing apparatus of this embodiment will be described. The original film 31 and the photosensitive material 32 are overlapped and placed on the table 4. After the upper frame 7 is closed, a start button (not shown) on the operation panel 35 is pressed, whereby the vacuum contact printing apparatus starts operation. The evacuating device 10 operates to remove the air from within the space 8 formed between the transparent plate 6 and the rubber sheet 1 with the airtight seal 2 interposed therebetween. Since the air is exhausted from the peripheral portions of the space 8, the contact of the rubber sheet 1 to the transparent plate 6 starts from its peripheral portions.

When the original film 31 and the photosensitive material 32 are to be placed on the rubber sheet 1, the nuts 78 are located beforehand in the foremost positions of the screw shafts 80 by means of the motor M3. Since the coupling shaft 73 engages with the nuts 78, the rear ends of the first arms 72 are located in positions near the front ends of the second arms 75. Accordingly, the X-shaped links formed by the corresponding first and second arms 72 and 75 become vertically stretched and the upper surface of the support plate 16 contacts and supports the lower surface of the rubber sheet 1 (as shown by the solid lines in Fig. 6).

Even if the upper surface of the support plate 16 is subjected to downward pressure, it does not move downward since the positions of the nuts 78 are defined by the screw shafts 80 and all the lower ends of the first and second arms 72 and 75 are fixed. On this occasion, there are no components subjected to particularly large load and the manufacturing and assembling of those components can be carried out easily. Accordingly, even when the original film 31 and the photosensitive material 32 are placed on the rubber sheet 1, no inconvenience occurs and the work can be carried out rapidly and accurately.

Simultaneously with the start of the operation of the printing apparatus, the rotating shaft of the motor M3 rotates in a certain direction. The nuts 78 move away from the motor M3 toward the sprockets 81. Since the rotating operation of the motor M3 is transmitted simultaneously to the two screw shafts 80 by means of the endless chain 82, the nuts 88 move horizontally in the same direction at the same speed.

The coupling shaft 73, which is supported by the fork portions 79 of the nuts 78, moves horizontally in the back-and-forth direction. The X-shaped links formed by the first and second arms 72 and 75 constitute a parallel movement mechanism. The front ends of the first arms 72 and the rear ends of the second arms 75 are always maintained at the same level. Accordingly, the height of the axis of the bearing 71 engaged with each first arm 72 is made equal to the distance of the axis of the guide roller 76 of each second arm 75 from the lower surface of the support plate 16, whereby the support plate 16 is raised or lowered being kept horizontal.

Since the engaging portion at the front end of each second arm 75 is provided just below the engaging portion at the front end of the corresponding first arm 72, the support plate 16 is kept horizontal while being raised and lowered in the vertical direction.

When the support plate 16 is lowered to the position shown by the chain line in Fig. 6 to allow a sufficient space for movement of the squeegee roller 11, the motor control circuit 38 operates the motor M1 to rotate the sprockets 93 in the direction shown by the arrow R in Fig. 7. The sprockets 92 and the endless chains 94 are rotated as the sprockets 93 rotates. The running saddles 13 start to move toward the rear end of the base frame 26 at a predetermined speed, e.g., 200 mm/sec.

When the squeegee roller 11 is in the start position A, the cam followers 22 are moved downward and the squeezing roller 11 is separated from the lower surface of the rubber sheet 1 because of the existence of the start point cam plates 25. When the running saddles 13 move to cause the cam followers 22 to be separated from the start point cam plates 25, the squeegee roller 11 is pressed against the lower surface of the rubber sheet 1 due to the biasing force of the compression spring 17. When the motor M1 further operates, the squeegee roller 11 moves to the end position C via the point B in Fig. 6. In the end position C, each cam follower 22 is dislocated downward by the lower end 21a of the plate cam 21 pushed to slide by the end point contact portion 24, and the squeegee roller 11 is separated from the lower surface of the rubber sheet 1.

The apparatus of this embodiment is considerably different from the conventional apparatus in that the squeegee roller 11 is stopped for a predetermined period (e.g., 3 sec.) in an intermediate position (shown by the point B) of its movement by the motor M1 controlled by the motor control circuit 38. The point B is selected to be a position a little short, e.g., about 50 mm, of the rear edge of the original film 31 and the photosensitive material 32. The squeegee roller 11 restarts to move further rearward after an elapse of a predetermined time period from the point B with the moving speed maintained at a speed considerably slower than the initial speed, e.g., about 15 mm/sec. The squeegee roller 11 does not necessarily need to be stopped. It may continue to move with a speed considerably slower than the speed before it reaches the above-mentioned point B.

Alternatively, after a temporary stop at the above mentioned point B, and after an elapse of time required for the air on the rear side of the stop position to be removed, the squeegee roller 11 may move again at a speed of about 200 mm/sec.

The peripheral portions of the rubber sheet 1 have already made close contact with the transparent plate 6. The forced movement of the blowhole 33 toward the outlet side by the squeegee roller 11 is suppressed. The conventional apparatus disregards this fact and accordingly cannot carry out a rapid removal of the air. In the apparatus according to the present invention, the squeegee roller 11 is temporarily stopped a little short of the rear edge of the original film 31, or the moving speed of the squeegee roller 11 is changed to a considerably slower speed compared with the moving speed till then, whereby the air in the blowhole 33 is continuously pushed to the air outlet 9. Consequently, the movement of the air in the blowhole 33 is speeded up.

According to this embodiment, the original film 31 and the photosensitive material 32 of a finish size corresponding to the A0 size (1420(mm) x 1140(mm)), for example, can be brought into close contact with each other within about 40sec. Since the time required for the contact in the conventional apparatus was about 60sec, the time required for the contact according to the present invention can be reduced by about 20sec.

It is to be noted that the squeegee roller may be stopped at an intermediate point during the movement or the moving speed thereof may be decreased considerably without stopping the roller. In the case of stopping the roller at an intermediate point, the remaining distance is preferably traversed after the original film and the photosensitive material are completely in contact, because there will be little blowhole left in that case.

In the apparatus of this embodiment, substantially a desired contact condition can be obtained when the advancing movement of the squeegee roller 11 is terminated. With the contact of the original film 31 and the photosensitive material 32 being maintained, the light source 30 turns on to start printing.

When the printing is terminated, the motor M1 operates to rotate the sprockets 92, 93 and the endless chains 94 in the reverse direction. The squeegee roller 11 returns to the start position A while being separated from the lower surface of the rubber sheet 1. In the start position A, the plate cams 21 move again by the contact portion 23 relatively rearward. The cam followers 22 are pushed under the corresponding cam plates 25, so that the squeegee roller 11 is maintained to be separated from the lower surface of the rubber sheet 1.

The motor M3 operates, whereby the screw shafts 80 rotates in the reverse direction. Both of the screw shafts 80 rotate simultaneously in the same direction by means of the sprockets 81 and the endless chain 82. The nuts 78 move simultaneously toward the motor M3 as the screw shafts 80 rotates. The coupling shaft 73 engaging with the upper surfaces of the nuts 78 also moves toward the motor M3. The ends of the respective first arms 72 coupled to the coupling shaft 73 approach the corresponding bearings 74 to which the second arms 75 are fixed, whereby the X-shaped links formed by those two arms respectively become vertically stretched. The support plate 16 is raised to hold the lower surface of the rubber sheet 1. In this case, since the coupling shaft 73 moves on a horizontal plane while being maintained horizontal, the upper surface of the support plate 16 is always maintained horizontal.

At an arbitrary time after the end of the exposure, the vacuum contact by the evacuating device 10 is cancelled. The operator opens the upper frame 7 and takes out the original film 31 and the photosensitive material 32. On this occasion, the work can be carried out smoothly since the lower surface of the rubber sheet 1 is firmly supported by the support plate 16.

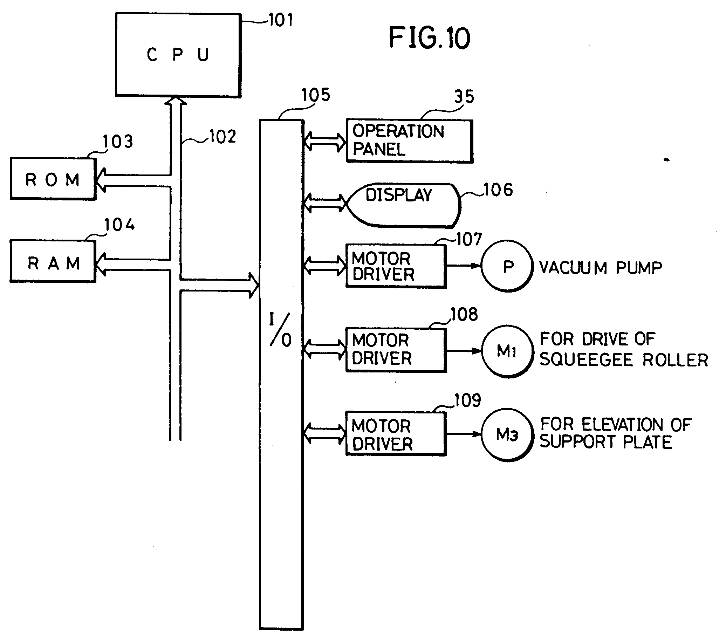

Referring to Fig. 10, the motor drive circuit 38 includes: a CPU (Central Processing Unit) 101, a bus 102 connected to the CPU 101, a ROM (Read Only Memory) 103 connected to the bus 102, where programs for controlling the operation of the vacuum contact printing apparatus are stored, a RAM (Random Access Memory) 104 connected to the bus 102, and used as an working-storage area by the CPU 101, and an I/O interface 105 connected to the bus 102. The ROM 103 stores in advance a table correlating the graduations 34 to the input values.

The interface 105 includes an operation panel 35, display 106 provided on the operation panel 35, for confirmative display of operation conditions and the like, a motor driver 107 for driving a vacuum pump P, and motor drivers 108, 109, for driving the motors M1, M3, respectively.

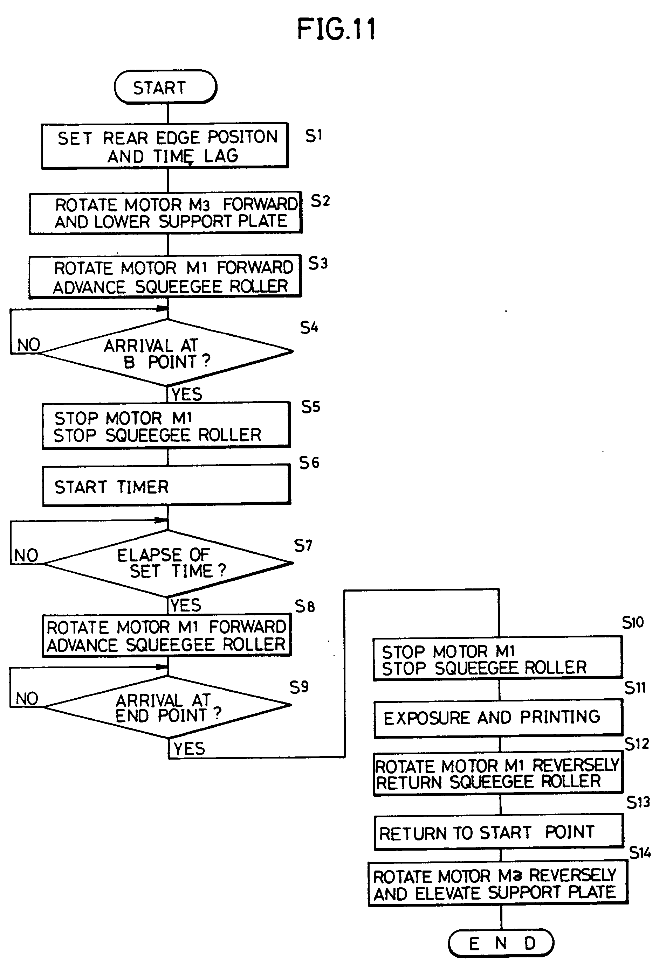

Referring to Fig. 11, the flow of control of a main part of a program executed by the CPU 101 will be described. In step S1, a rear edge position of the original film 31 and so on, and an intermediate stop time of the squeegee roller 11 are set by the operator through the operation panel 35. Before that, the original film 31 and the like have been placed on the rubber sheet 1 and the vacuum pump 1 has started operation.

In step S2, the motor M3 is rotated in one direction by the motor driver 109 and the support plate 16 is lowered. In step S3, the motor M1 is rotated in one direction and the squeegee roller 11 moves at a predetermined speed. The position of the squeegee roller 11 is detected for example by counting the number of pulses of the motor driver 109.

In step S4, it is determined whether the squeegee roller 11 reaches the stop point B or not. If the condition is met, the control flow proceeds to step S5, where the motor M1 is stopped and the squeegee roller 11 is also stopped.

The steps S6 and S7 are waiting steps for keeping the squeegee roller 11 stopped during the stop time set in step S1. In step S6, a timer is started. In step S7, the set stop time and the count of the timer are compared. If the count of the timer is larger than the set stop time, the flow proceeds to step S8.

In step S8, the motor M1 is restarted to rotate again in the one direction and the squeegee roller 11 moves in the same direction as before, but at a very low speed this time. The step S9 is a step for determining whether the squeegee roller 11 reaches the end point C of the advancing movement. If the prescribed condition is met in step S9, the flow proceeds to step S10.

In step S10, the motor M1 is stopped again and the squeegee roller 11 is stopped at the end position C. Then, in step S11, printing and exposure by using the light source 30 are carried out.

In step S12, the rotating shaft of the motor M1 is rotated in the reverse direction and the squeegee roller 11 moves to the start position. The step S13 is for returning the squeegee roller 11 to the start point and stopping the motor M1.

In step S14, the motor M3 rotates in the reverse direction and the support plate 16 is raised. The motor M3 is stopped when the support plate 16 attains a predetermined level. After that, the vacuum contact by the evacuating device 10 is cancelled and the original film and the photosensitive material subjected to the exposure are taken out.

As described above, in the vacuum contact printing apparatus of this embodiment, the rubber sheet 1 is firmly supported by the support plate 16 when the original film 31 and so on are placed thereon. Consequently, the original film and so on can be placed easily and rapidly with accuracy. Since the squeegee roller stops at an intermediate point of the advancing movement or changes its moving speed to a very low speed at an intermediate point in the advancing movement, the air near the rear edge of the original film, which it generally takes a long time to remove, can be reliably removed. The contact between the original film 31 and the photosensitive material 32 is carried out more rapidly and more reliably compared with the conventional apparatus and, accordingly, an accurate exposure process can be carried out in a short period.

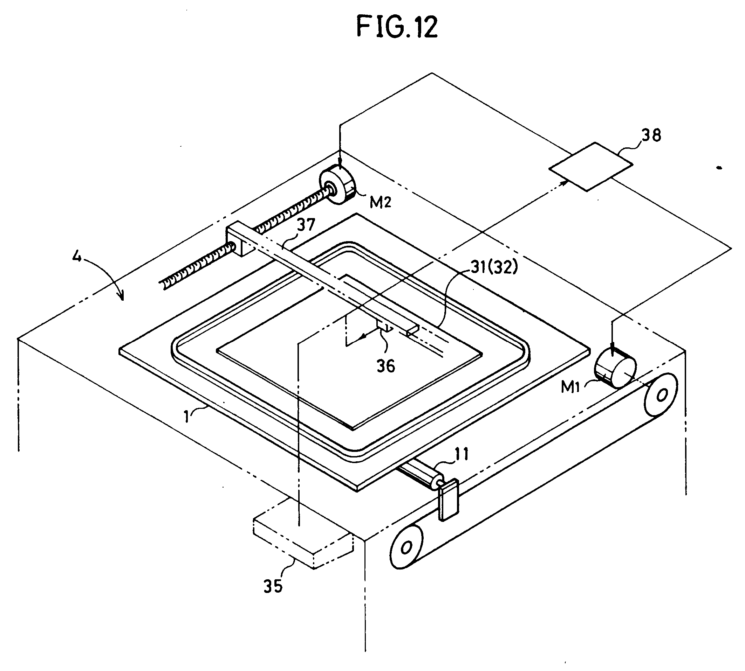

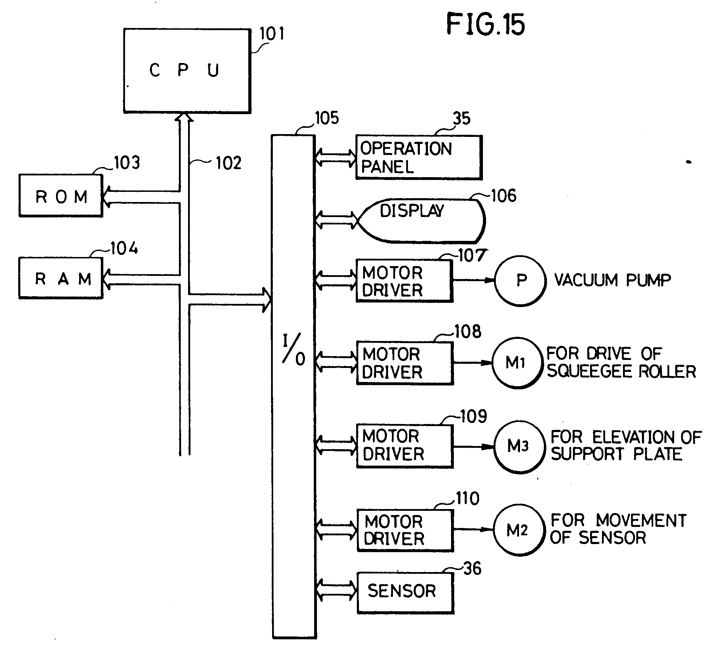

Referring to Figs. 12 to 15, a vacuum contact printing apparatus according to another embodiment of the invention will be described. A difference of this apparatus from the apparatus of the first embodiment shown in Fig. 7 is that a sensor 36 for detecting the rear edge positions of the original film 31 and the photosensitive material 32, and a mechanism for driving the sensor 36 are newly provided in place of the graduations 34 provided on the table 4. Since the other portions are the same as those in the apparatus of the first embodiment, the description thereof is not repeated. The same components as those of the first embodiment, including the components not referred to in the following description, are assigned the same reference characters and the same names.

The upper frame 7 of this apparatus includes, in addition to the upper frame 7 of the first embodiment, the following components: a pair of bearings 111 provided oppositely on both ends of one side of the upper frame 7; a pair of support members 113 provided on both ends of one side opposite to the side provided with the pair of bearings 111; a screw shaft 112 having both ends supported by the pair of bearings 111; a shaft 114 having both ends supported by the pair of support members 113; a motor M2 fixed to one of the bearings 111 of the screw shaft 112, for rotating the screw shafts 112 around its axis; a running beam 37 having one end engaged with the screw shaft 112 and the other end slidably supported by the shaft 114; and a sensor 36 provided under a central portion of the running beam 37.

The motor M2 is connected to the interface 105 through the motor driver 110. The sensor 36 is also connected to the interface 105. The sensor 36 is a reflection type photosensor, e.g., a CCD (Charge Coupled Device) using light of a certain wavelength so as not to exert any adverse effect on the photosensitive material 32. In the apparatus of this embodiment the sensor 36 automatically reads the rear edge position of the original film 31 in place of visual confirmation of that position by the operator.

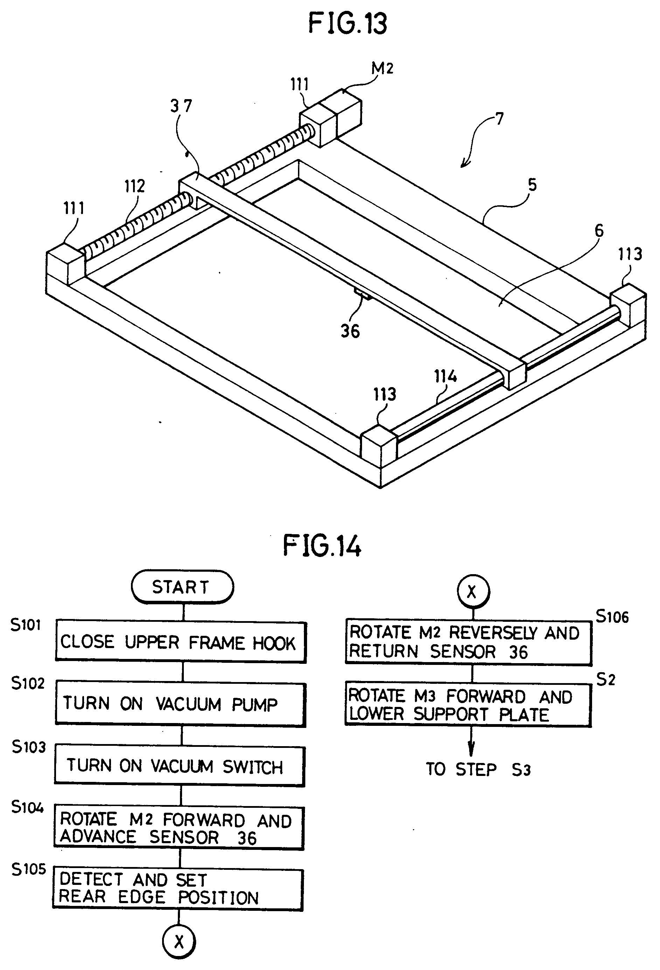

With particular reference to Fig. 14, operation of the apparatus of this embodiment will be described. The flow chart of the program of the first embodiment shown in Fig. 11 and that of this embodiment are common in the steps starting from step S2 in Fig. 11. Fig. 14 shows only the processing from the start of the operation of the vacuum contact printing apparatus till the step S2.

In step S101, the operator places the original film 31 and the photosensitive material 32 on the rubber sheet 1 and closes the upper frame 7. When a hook, not shown, provided in the upper frame 7 is closed, operation of the vacuum pump P is started in step S102. A vacuum switch, not shown, is turned on in step S103 in response to a partial vacuum caused, which is detected by the CPU 101.

In step S104, the motor M2 is rotated in the regular direction, so that the running beam 37 moves on the transparent plate in one direction. In step S105, the rear edge position of the original film 31 and the like is detected by the CPU 101 by an output change of the sensor 36 and the detected result is stored in the RAM 104.

In step S106, the motor M2 rotates in the reverse direction, so that the running beam 37 moves on the transparent plate 6 to return to the initial position. Further, in steps S2 et seq., the same control as the program for controlling the apparatus of the first embodiment is executed. Since the description thereof is already given, it is not repeated.

In the apparatus of this second embodiment also, the squeegee roller 11 stops at a position set by the sensor 36 (a little short of the rear edge of the original film 31 and so on) or the moving speed of the squeegee roller 11 is considerably lowered at that position. In consequence, the air remaining near the original film 31 can be completely removed and printing can be carried out in good condition. Particularly, in this apparatus, the rear edge position of the original film and the like is automatically set and accordingly the operation becomes very simple.

Each of the above described embodiments is related with the apparatus in which the original film 31 is placed on the rubber sheet 1 and the light source for exposure is provided above. However, the present invention is not limited to those embodiments. For example, the techniques proposed by the present invention are applicable to an apparatus in which an original film is placed on a transparent plate and a light source is provided under the transparent plate.

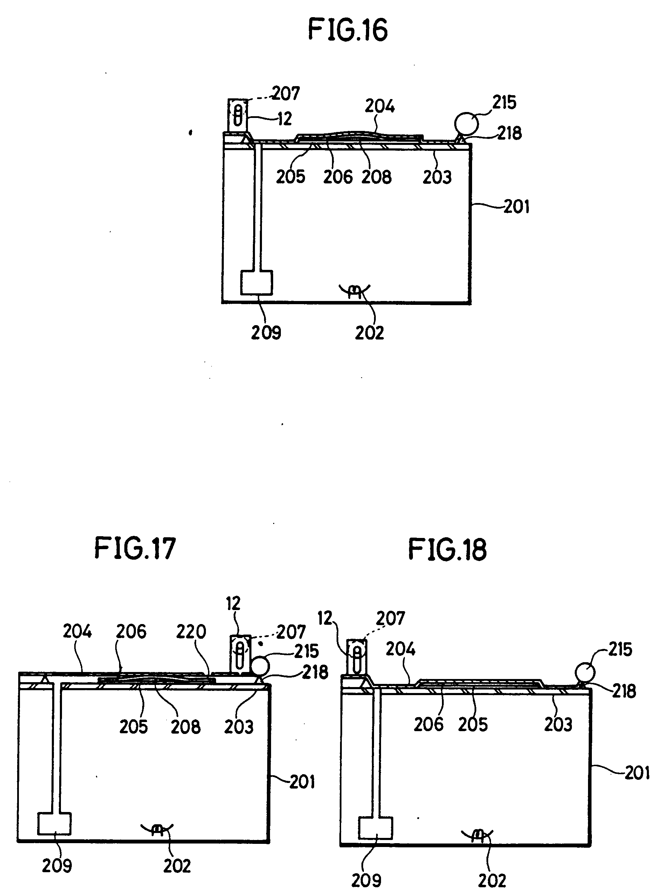

Figs. 16 through 18 illustrate an embodiment in which the present invention is applied to the above-type of apparatus.

The following will be differences of the instant embodiment from the first embodiment.

A light source 202 is disposed on a lower portion of a base frame 201 and under a transparent plate 203, upon which are placed original film 205 and a photosensitive material 206 in this order. Reference numeral 209 denotes a vacuum pump; 215 a roller for winding up an elastic rubber sheet 204; 218 an airtight seal; and 220 a register pin for positioning the original film 205 and the photosensitive material 206 on the transparent plate 203.

In operation, the original film 205 and the photosensitive material 206 are placed on the transparent plate 203. The roller 215 is, then, horizontally moved by a driving unit not shown while rotated along and over the transparent plate 203 and the photosensitive material 206 so as to draw up and stretch the rubber sheet 204 over the same. The vacuum pump 209 is actuated to removed the air from within the space defined by the transparent plate 203, the rubber sheet 204, and the airtight seal 218, as shown in Fig. 16. Next, the squeegee roller 207 is horizontally moved toward the roller 215 in the left to right direction in Fig. 17 by the squeegee roller drive unit 28, not making contact with the rubber sheet 204. The squeegee roller 207 is, then, returned to its initial position while pressing the upper surface of the rubber sheet 204 by the unit 28 as shown in Fig. 18, in order to bring the original film and the photosensitive material into close contact with each other. Needless to say, the squeegee roller 207 is stopped or moved at a reduced speed on a predetermined intermediate point of the traversing distance, for the purpose of rapidly and completely expelling a blowhole 208, as in the first embodiment. The remaining procedures are the same as those of the first embodiment.

Although the present invention has been described and illustrated in detail, it is clearly understood that the same is by way of illustration and example only and is not to be taken by way of limitation, the spirit and scope of the present invention being limited only by the terms of the appended claims.

## Claims

1. A vacuum contact printing apparatus comprising:
a transparent plate (6) and an elastic sheet (1) arranged to define an airtight space when overlapped one over the other, and to hold an original film (31) and a photosensitive material (32) to be placed between said transparent plate (6) and said elastic sheet (1),
a light source (30) arranged on that side of said transparent plate (6) which is opposite to said elastic sheet (1), for supplying light to expose an image of said original film (31) on said photosensitive material (32),
evacuating means (10) arranged to remove the air from said airtight space defined between said transparent plate (6) and said elastic sheet (1),
a squeegee means (11) arranged to be moved on said elastic sheet,
driving means (40) arranged to move said squeegee means (11) in a first direction from a start position at an initial first speed,
pressing means (17) arranged to press toward said transparent plate (6) said squeegee means (11) during said movement thereof, thereby pressing said elastic sheet (1) against said transparent plate (6) so as to forcedly move the air to be removed from said airtight space,
said apparatus being characterised in that
said driving means (40) includes speed changing means (38) arranged to change the moving speed of said squeegee means (11) to a second speed, which is lower than said first speed, when said squeegee means has reached an intermediate position on said elastic sheet (1).

2. A vacuum contact printing apparatus in accordance with claim 1, wherein
said airtight space communicates with said evacuating means (10) through an air outlet (9) which is located opposite to said start position with respect to said first direction.

3. A vacuum contact printing apparatus in accordance with claim 2, wherein
said driving means (40) comprises means for moving said pressing means (17) in said first direction together with said squeegee means.

4. A vacuum contact printing apparatus in accordance with claim 3, wherein said squeegee means (11) comprises
a squeegee roller (11) arranged to be rotated in contact with said elastic sheet (1).

5. A vacuum contact printing apparatus in accordance with claim 4, wherein
said speed changing means (38) comprises
a sensor means (36) for outputting an edge position indicating signal indicating the position with respect to said first direction of one edge of said original film (31) or of said photosensitive material (32), means for detecting the position of said squeegee roller (11) and outputting a squeegee position signal,
and
first signal generating means responsive to said edge position indicating signal and said squeegee position signal, for generating a prescribed first signal when said squeegee roller (11) reaches during said movement thereof a position preceding said edge position by a predetermined distance in said first direction, and
said changing means (38) are arranged to change the moving speed of said pressing means from said first speed to said second speed lower than said first speed, in response to said first signal.

6. A vacuum contact printing apparatus in accordance with claim 5, wherein
said speed changing means (38) further comprises means for generating a prescribed second signal after a predetermined time from the output of said first signal,
and
are arranged to change the speed of said pressing means to a third speed higher than said second speed, in response to said second signal.

7. A vacuum contact printing apparatus in accordance with claim 6, wherein
said second speed is zero.

8. A vacuum contact printing apparatus in accordance with claim 5, further comprising
a table (4) having a rectangular opening in the center, said elastic sheet (1) being stretched on one surface thereof, covering said opening in the orientation of normal use of the apparatus said table being substantially horizontal,
an upper frame (7) attached rotatably to one border of said table (4), to cover the surface of said table (4),
said upper frame (7) having an opening (46) in its central portion, and said transparent plate (1) being fixed to the lower side of said upper frame (7) and an airtight seal (2) is provided to surround said opening (46) of said upper frame (3), and to define said airtight space within said transparent plate (1) and said elastic sheet (1) when said upper frame (7) covers said table (4).

9. A vacuum contact printing apparatus in accordance with claim 8, further comprising
support means provided under the opening of said table (4), for supporting, from below, a portion of said elastic sheet (1) where said photosensitive material (32) and said original film (31) are placed thereon.

10. A vacuum contact printing apparatus in accordance with claim 9, wherein
said support means comprises
a support plate (16) to be in contact with the lowest surface of said elastic sheet (1),
a support mechanism (90) for supporting said support plate (16) in a vertically movable manner and supporting stable said support plate (16) at least when said support plate (16) contacts the lower surface of said elastic sheet (1), and
a support plate drive means (91) for driving said support mechanism (90) to raise and lower said support plate (16).

11. A vacuum contact printing in accordance with claim 5, wherein
graduations (34) are formed on said elastic sheet (1) and further comprising
input means for inputting a read value of said graduations (34) which is indicative of a rear edge position of said original film or said photosensitive material (32) in said first direction when said original film (31) and said photosensitive material (32) are placed on said elastic sheet (1), and
means for generating said edge position indicating signal on the basis of the value input to said input means.

12. A vacuum contact printing apparatus in accordance with claim 5, wherein
said sensor means (36) comprises
detecting means provided movably along said first direction over said transparent plate (6) for detecting optically a rear edge position with respect to said first direction, of said photosensitive material (32) or original film (31) placed on said elastic sheet (1), by using light having a wavelength different the light sensitive wavelength range of said photosensitive material (32).

13. A printing apparatus according to claim 1, wherein in the orientation of normal use of the apparatus said elastic sheet (1) is substantially horizontal and further comprising an elastic sheet support device for supporting the lower surface of said elastic sheet (1) stretched over an opening (46) formed in a frame (26), to prevent said elastic sheet (1) from deforming downward, comprising:
a support plate (16) to be in contact with the lower surface of said elastic sheet, said support plate having a first edge and a second edge opposite to said first edge,
a pair of first arm means (72) each having one end movably attached under said first edge, said respective first arms being rotatably in different planes parallel to each other and intersecting with said lower surface,
a pair of second arm means (75) each having one end attached to said frame (26) under said support plate (16) rotatably in the plane of rotation of said respective first arm means (72), and the other end slidably in contact with the lower surface of said support plate (16) on the side of said second edge, attached to said respective first arm means (72) so as to cross the same with the upper surface of said support plate (16) being maintained in parallel with the lower surface of said elastic sheet (1), and
synchronization drive means (73, 91) for maintaining the respective other ends of said pair of first arm means (72) and moving said other ends in synchronization at least in the first direction connecting said first edge and said second edge.

14. A vacuum contact printing apparatus in accordance with claim 13, wherein
said first arm means (72) and said second arm means (75) have the same length.

15. A vacuum contact printing apparatus in accordance with claim 14, wherein
said first and second arm means (72, 75) are engaged with each other at their respective middle points (70).

16. A vacuum contact printing apparatus in accordance with claim 15, further comprising
a guide roller (76) supported by the respective other ends of said second arm means (75) and rolling along the lower surface of said support plate (16).

17. A vacuum contact printing apparatus in accordance with claim 16, wherein
the one end of each of said first arm means (72) is located in the same position of said support plate (16) with respect to said first direction.

18. A vacuum contact printing apparatus in accordance with claim 17, wherein
said synchronization drive means comprises
a shaft rod (73) coupling the respective other ends of said pair of first arm means, and
shaft rod drive means (91) for driving said shaft rod (73) in parallel with the lower surface of said support plate and along said first direction.

19. A vacuum contact printing apparatus in accordance with claim 18, further comprising
actuating means (85) for actuating said shaft rod (73) normally in a direction from said second edge to said first edge.

20. A vacuum contact printing apparatus in accordance with claim 19, wherein
said actuating means (85) comprises an extension coil spring (85) having one end fixed to said frame (76) on the side of said first edge and the other end fixed to said shaft rod (73).

21. A vacuum contact printing apparatus in accordance with claim 20, wherein
said shaft rod drive means (91) comprises
a first nut (78) engaging with said shaft rod (73),
a first screw shaft (80) provided along said first direction near said shaft rod (73) and engaging with said first nut (73), and
rotation drive means (113, 83) for rotating said first screw shaft (80) along its axis.

22. A vacuum contact printing apparatus in accordance with claim 21, wherein
said rotation drive means (91) comprises a motor (43) fixed to said frame and having its rotating axis coupled to said first screw shaft (80).

23. A vacuum contact printing apparatus in accordance with claims 22, wherein
said shaft rod drive means (91) further comprises
a second nut (78) engaging with said shaft rod (73),
a second screw shaft (80) provided in parallel with said first screw shaft (80) and engaging with said second nut (78), and
transmission means (82) for transmitting the rotation of said first screw shaft (80) to said second screw shaft (80).

24. A vacuum contact printing apparatus in accordance with claim 16, further comprising
guide rail means (77) provided along a course of rolling of said guide roller (76) under said support plate (14), for guiding the rolling of said guide roller (76) and defining a spacing of said guide roller (76) from the lower surface of said support plate (16).

25. A vacuum contact method of contacting in timately a transparent plate (6) and an elastic sheet (1) by removing the air from an airtight space defined by said transparent plate (6) and said elastic sheet (1) in a vacuum contact printing apparatus in accordance with one of the preceding claims,
the method comprising the steps of:
placing said original film (31) and said photosensitive material (32) in an overlapping manner between said transparent plate (6) and said elastic sheet (1),
removing the air between said transparent plate (6) and said elastic sheet (1),
moving said squeegee means (11, 40) at a predetermined first speed, and
changing the speed of said squeegee means (11, 40) during the movement of said squeegee means (11, 40) from said first speed to a second speed lower than said first speed.

26. A vacuum contact method in accordance with claim 25, further comprising the step of
changing the speed of said squeegee means (11, 40) during the movement thereof at said second speed to a third speed higher than said second speed.

27. A vacuum contact method in accordance with claims 26, further comprising the step of
detecting a rearmost edge position of said original film or said photosensitive material (32) along the moving direction of said squeegee means (11, 40), and
changing the speed of said squeegee means (11, 40) to said second speed when said squeegee means (11, 40) reaches a position preceding said rearmost edge position by a predetermined distance.

28. A vacuum contact method in accordance with claim 27, wherein
said first speed is more than 200 mm/sec.

29. A vacuum contact method in accordance with claim 28, wherein
said second speed is 15 mm/sec or less.

30. A vacuum contact method in accordance with claim 29, wherein
said second speed is 0 mm/sec.

31. A vacuum contact method in accordance with claim 30, wherein
said third speed is more than 200 mm/sec.

## Patentansprüche

1. Vakuumkontakt-Druckgerät, mit:
einer transparenten Platte (6) und einer elastischen Folie (1), die so angeordnet sind, daß sie einen luftundurchlässigen Raum definieren, wenn sie übereinander gelegt sind, und daß sie einen Vorlagefilm (31) und ein photosensitives Material (32) halten, die zwischen die transparente Platte (6) und die elastische Folie (1) gelegt werden sollen,
einer Lichtquelle (30), die auf der Seite der transparenten Platte (6) angeordnet ist, die der elastischen Folie (1) gegenüberliegt, um Licht zu liefern, um ein Bild des Vorlagefilms (31) auf dem photosensitiven Material (32) zu belichten,
Evakuiereinrichtungen (10), die so angeordnet sind, daß sie Luft aus dem luftundurchlässigen Raum entfernen, der zwischen der transparenten Platte (6) und der elastischen Folie (1) definiert ist,
einer Quetscheinrichtung (11), die so angeordnet ist, daß sie auf der elastischen Folie bewegt wird,
Antriebseinrichtungen (40), die so angeordnet sind, daß sie Quetscheinrichtung (11) in einer ersten Richtung von einer Startposition mit einer anfänglichen ersten Geschwindigkeit bewegen,
Andruckeinrichtungen (17), die so angeordnet sind, daß sie die Quetscheinrichtung (11) während ihrer Bewegung in Richtung auf die transparente Platte (6) drücken, wodurch die elastische Folie (1) gegen die transparente Platte (6) gedrückt wird, um so erzwungenermaßen die Luft zu bewegen, daß sie aus dem luftundurchlässigen Raum entfernt wird,
wobei das Gerät dadurch gekennzeichnet ist, daß
die Treibereinrichtung (40) Geschwindigkeitsänderungseinrichtungen (38) umfaßt, die so angeordnet sind, daß sie Bewegungsgeschwindigkeit der Quetscheinrichtung (11) auf eine zweite Geschwindigkeit ändern, die geringer ist als die erste Geschwindigkeit, wenn die Quetscheinrichtung eine Zwischenposition auf der elastischen Folie (1) erreicht hat.

2. Vakuumkontakt-Druckgerät nach Anspruch 1, bei dem der luftundurchlässige Raum mit der Evakuiereinrichtung (10) durch einen Luftauslaß (9) kommuniziert, der gegenüber der Startposition in bezug auf die erste Richtung angeordnet ist.

3. Vakuumkontakt-Druckgerät nach Anspruch 2, bei dem die Treibereinrichtung (40) eine Einrichtung zum Bewegen der Andruckeinrichtung (17) in die erste Richtung zusammen mit der Quetscheinrichtung aufweist.

4. Vakuumkontakt-Druckgerät gemäß Anspruch 3, wobei die Quetscheinrichtung (11) eine Quetschwalze (11) aufweist, die so angeordnet ist, daß sie in Kontakt mit der elastischen Folie (1) gedreht wird.

5. Vakuumkontakt-Druckgerät gemäß Anspruch 4, bei dem die Geschwindigkeitsänderungseinrichtung (38)
eine Sensoreinrichtung (36) zum Ausgeben eines eine Kantenposition anzeigenden Signals, das die Position mit Bezug auf die erste Richtung einer Kante des Vorlagefilms (31) oder des photosensitiven Materials (32) anzeigt,
eine Einrichtung zum Erfassen der Position der Quetschwalze (11) und zum Ausgeben eines Quetsch-Positionssignals, und
eine erste signalerzeugende Einrichtung, ansprechend auf das die Kantenposition anzeigende Signal und das Quetsch-Positionssignal, zum Erzeugen eines vorgeschriebenen ersten Signals, wenn die Quetschwalze (11) während ihrer Bewegung eine Position erreicht, die der Kantenposition um eine vorbestimmte Entfernung in der ersten Richtung vorausgeht, und
wobei die Änderungseinrichtung (38) so angeordnet ist, daß sie die Bewegungsgeschwindigkeit der Druckeinrichtung von der ersten Geschwindigkeit auf die die zweite Geschwindigkeit, die geringer als die erste Geschwindigkeit ist, ansprechend auf das erste Signal ändert.

6. Vakuumkontakt-Druckgerät nach Anspruch 5, bei dem
die Geschwindigkeitsänderungseinrichtung (38) weiterhin eine Einrichtung zum Erzeugen eines vorgeschriebenen zweiten Signals nach einer vorbestimmten Zeit von der Ausgabe des ersten Signals aufweist
und
so angeordnet sind, daß die Geschwindigkeit der Andruckeinrichtung auf eine dritte Geschwindigkeit geändert wird, die höher ist als die zweite Geschwindigkeit ist, ansprechend auf das zweite Signal.

7. Vakuumkontakt-Druckgerät nach Anspruch 6, bei dem die zweite Geschwindigkeit Null ist.

8. Vakuumkontakt-Druckgerät nach Anspruch 5, das weiter aufweist:
einen Tisch (4) mit einer rechteckigen Öffnung in der Mitte, wobei die elastische Folie (1) auf einer Fläche davon gestreckt wird, wobei die Öffnung in der Ausrichtung der normalen Verwendung des Gerätes überdeckt wird, in der der Tisch im wesentlichen horizontal ist,
einen oberen Rahmen (7) der drehbar an einer Kante des Tisches (4) befestigt ist, um die Fläche des Tisches (4) abzudecken,
wobei der obere Rahmen (7) eine Öffnung (46) in seinem Mittenabschnitt hat und die transparente Platte (1) an der unteren Seite des oberen Rahmens (7) befestigt ist und eine luftundurchlässige Dichtung (2) vorgesehen ist, um die Öffnung (46) des oberen Rahmens (3) zu umgeben und um den luftundurchlässigen Raum innerhalb der transparenten Platte (1) und der elastischen Folie (1) zu definieren, wenn der obere Rahmen (7) den Tisch (4) abdeckt.

9. Vakuumkontakt-Druckgerät nach Anspruch 8, das weiterhin aufweist:
Trägereinrichtungen, die unter der Öffnung des Tisches (4) vorgesehen sind, um von unten einen Bereich der elastischen Folie (1) abzustützen, auf den das photosensitive Material (32) und der Vorlagefilm (31) gelegt sind.

10. Vakuumkontakt-Druckgerät nach Anspruch 9, bei dem die Trägereinrichtung aufweist:
eine Trägerplatte (16), die in Kontakt mit der untersten Fläche der elastischen Folie (1) ist,
einen Trägermechanismus (90) zum Abstützen der Trägerplatte (16) in einer vertikal bewegbaren Weise und zum stabilen Abstützen der Trägerplatte (16) wenigstens dann, wenn die Trägerplatte (16) die untere Fläche der elastischen Folie (1) kontaktiert und
eine Trägerplatten-Antriebseinrichtung (91) zum Antreiben des Trägermechanismus (90), um die Trägerplatte (16) anzuheben und abzusenken.

11. Vakuumkontakt-Druckgerät nach Anspruch 5, bei dem
Abstufungen (34) auf der elastischen Folie (1) ausgebildet sind, und das weiter aufweist:
eine Eingabeeinrichtung zum Eingeben eines gelesenen Wertes der Abstufungen (34), der einen rückwärtigen Kantenabschnitt des Vorlagefilms oder des photosensitiven Materials (32) in der ersten Richtung anzeigt, wenn der Vorlagefilm (31) und das photosensitive Material (32) auf die elastische Folie (1) gelegt sind, und
eine Einrichtung zum Erzeugen des die Kantenposition anzeigenden Signals auf der Basis des Wertes, der in die Eingabeeinrichtung eingegeben ist.

12. Vakuumkontakt-Druckgerät nach Anspruch 5, bei dem die Sensoreinrichtung (36) eine Erfassungseinrichtung aufweist, die bewegbar entlang der ersten Richtung über die transparente Platte (6) vorgesehen ist, zum optischen Erfassen einer rückwärtigen Kantenposition in Bezug auf die erste Richtung des photosensitiven Materials (32) oder des Vorlagefilms (31), die auf die elastische Folie (1) gelegt sind, indem Licht mit einer Wellenlänge unterschiedlich von dem lichtempfindlichen Wellenlängenbereich des photosensitiven Materials (32) verwendet wird.

13. Druckgerät nach Anspruch 1, bei dem in der Ausrichtung der normalen Verwendung des Gerätes die elastische Folie (1) im wesentlichen horizontal ist und das weiterhin eine Trägervorrichtung für die elastische Folie zum Abstützen der unteren Fläche der elastischen Folie (1), die über eine Öffnung (46) welche in einem Rahmen (26) gebildet ist, gestreckt ist, aufweist, um zu verhindern, daß sich die elastische Folie (1) nach unten deformiert, mit: einer Trägerplatte (16), die in Kontakt mit der unteren Fläche der elastischen Folie ist, wobei die Trägerplatte eine erste Kante und eine zweite Kante gegenüber der ersten Kante hat,
einem Paar erster Armmittel (72), die jeweils ein Ende bewegbar unter der ersten Kante befestigt haben, wobei die jeweiligen ersten Arme in unterschiedlichen Ebenen parallel zueinander drehbar sind und sich mit der unteren Fläche schneiden, einem Paar zweiter Armmittel (75), die jeweils ein Ende an dem Rahmen (26) unter der Trägerplatte (16) befestigt haben, drehbar in der Drehebene der jeweiligen ersten Armmittel (72), und wobei das andere Ende gleitbar in Kontakt mit der unteren Fläche der Trägerplatte (16) auf der Seite der zweiten Kante ist, befestigt an den jeweiligen ersten Armmitteln (72), um somit dieselbe mit der oberen Fläche der Trägerplatte (16) zu durchkreuzen, die parallel zu der unteren Fläche der elastischen Folie (1) gehalten wird, und Synchronisations-Treibereinrichtungen (73, 91) zum Halten der jeweiligen anderen Enden der Paare erster Armmittel (72) und zum Bewegen der anderen Enden in Synchronisation wenigstens in der ersten Richtung, die die erste Kante und die zweite Kante verbindet.

14. Vakuumkontakt-Druckgerät nach Anspruch 13, bei dem die ersten Armittel (72) und die zweiten Armmittel (75) dieselbe Länge haben.

15. Vakuumkontakt-Druckgerät nach Anspruch 14, bei dem die ersten und zweiten Armmittel (72, 57) an ihren jeweiligen Mittelpunkten (70) miteinander im Eingriff sind.

16. Vakuumkontakt-Druckgerät nach Anspruch 15, das weiterhin aufweist:
eine Führungswalze (76), die von den jeweiligen anderen Enden der zweiten Armmittel (75) getragen werden und entlang der unteren Fläche der Trägerplatte (16) rollen.

17. Vakuumkontakt-Druckgerät nach Anspruch 16, bei dem das eine Ende jedes der ersten Armmittel (72) in derselben Position der Trägerplatte (16) in Bezug auf die erste Richtung angeordnet ist.

18. Vakuumkontakt-Druckgerät nach Anspruch 17, bei dem die Synchronisations-Treibereinrichtung aufweist:
eine Wellenstange (73), die die jeweiligen Enden des Paars erster Armmittel koppelt, und
Wellenstangen-Antriebseinrichtungen (91) zum Antreiben der Wellenstange (73) parallel zu der unteren Fläche der Trägerplatte und entlang der ersten Richtung.

19. Vakuumkontakt-Druckgerät nach Anspruch 18, das weiter eine Betätigungseinrichtung (85) zum Antreiben der Wellenstange (73) normalerweise in einer Richtung von der zweiten Kante zu der ersten Kante aufweist.

20. Vakuumkontakt-Druckgerät nach Anspruch 19, bei dem die Betätigungseinrichtung (85) eine Dehn-Spulenfeder (85) aufweist, deren eines Ende an dem Rahmen (76) auf der Seite der ersten Kante und dessen anderes Ende an der Wellenstange (73) befestigt ist.

21. Vakuumkontakt-Druckgerät nach Anspruch 20, bei dem die Wellenstangen-Antriebseinrichtung (91)
eine erste Mutter (78), die mit der Wellenstange (73) im Eingriff ist,
eine erste Schraubwelle (80), die entlang der ersten Richtung nahe der Wellenstange (73) vorgesehen ist und mit der ersten Mutter (78) im Eingriff ist, und
eine Drehantriebseinrichtung (113, 83) zum Drehen der ersten Schraubwelle (80) entlang ihrer Achse aufweist.

22. Vakuumkontakt-Druckgerät nach Anspruch 21, bei dem die Drehantriebseinrichtung (21) einen Motor (43) aufweist, der an dem Rahmen befestigt ist und seine Drehachse an die erste Schraubwelle (80) gekoppelt hat.

23. Vakuumkontakt-Druckgerät nach Anspruch 22, bei dem die Wellenstangen-Antriebseinrichtungen (91) weiter
eine zweite Mutter (78), die mit der Wellenstange (73) im Eingriff ist,
eine zweite Schraubwelle (80), die parallel zu der ersten Schraubwelle (80) vorgesehen ist und mit der zweiten Mutter (78( im Eingriff ist, und
eine Übertragungseinrichtung (82) zum Übertragen der Drehung der ersten Schraubwelle (80) auf die zweite Schraubwelle (80) aufweist.

24. Vakuumkontakt-Druckgerät nach Anspruch 16, das weiter Führungsschieneneinrichtungen (77) aufweist, die entlang einer Rollstrecke der Führungswalze (76) unter der Trägerplatte (14) vorgesehen sind, zum Führen des Rollens der Führungswalze (76) und zum Definieren eines Abstands der Führungswalze (76) von der unteren Fläche der Trägerplatte (17).

25. Vakuumkontaktverfahren zum intensiven Inkontaktbringen einer transparenten Platte (6) und einer elastischen Folie (1) durch Entfernen der Luft aus einem luftundurchlässigen Raum, der durch die transparente Platte (6) und die elastische Folie (1) in einem Vakuumkontakt-Druckgerät gemäß einem der vorangehenden Ansprüche definiert ist, wobei das Verfahren die Schritte aufweist:
Bringen des Vorlagefilms (31) und des photosensitiven Materials (32) übereinandergelegt zwischen die transparente Platte (6) und die elastische Folie (1),
Entfernen der Luft zwischen der transparenten Platte (6) und der elastischen Folie (1),
Bewegen der Quetscheinrichtung (11, 40) mit einer vorbestimmten ersten Geschwindigkeit und
Ändern der Geschwindigkeit der Quetscheinrichtung (11, 40) während der Bewegung der Quetscheinrichtung (11, 40) von der ersten Geschwindigkeit in eine zweite Geschwindigkeit, die geringer als die erste Geschwindigkeit ist.

26. Vakuumkontaktverfahren gemäß Anspruch 25, das weiterhin die Schritte des Änderns der Geschwindigkeit der Quetscheinrichtung (11, 40) während deren Bewegung mit der zweiten Geschwindigkeit auf eine dritte Geschwindigkeit höher als die zweite Geschwindigkeit aufweist.

27. Vakuumkontaktverfahren nach Anspruch 26, das weiterhin den Schritt des
Erfassen einer rückwärtigsten Kantenposition des Vorlagefilms oder des photosensitiven Materials (32) entlang der Bewegungsrichtung der Quetscheinrichtung (11, 40) und
des Änderns der Geschwindigkeit der Quetscheinrichtung (11, 40) auf die zweite Geschwindigkeit, wenn die Quetscheinrichtung (11, 40) eine Position erreicht, die der rückwärtigsten Kantenposition um eine vorbestimmte Entfernung vorangeht.

28. Vakuumkontaktverfahren nach Anspruch 27, bei dem erste Geschwindigkeit höher als 200 mm/sec ist.

29. Vakuumkontaktverfahren nach Anspruch 28, bei dem die zweite Geschwindigkeit 15 mm/sec oder weniger ist.

30. Vakuumkontaktverfahren nach Anspruch 29, bei dem die zweite Geschwindigkeit 0 mm/sec ist.

31. Vakuumkontaktverfahren nach Anspruch 30, bei dem die dritte Geschwindigkeit höher als 200 mm/sec ist.

## Revendications

1. Appareil d'impression par contact sous vide comprenant :
une plaque transparente (6) et une feuille élastique (1) agencées pour définir un espacement étanche à l'air lorsque placées l'une sur l'autre, et pour maintenir un film original (31) et une matière photosensible (32) à placer entre ladite plaque transparente (6) et ladite feuille élastique (1),
une source de lumière (30) agencée sur ce côté de ladite plaque transparente (6) qui est opposée à ladite feuille de caoutchouc (1), pour fournir la lumière pour exposer une image dudit film original (31) sur ladite matière photosensible (32),
un moyen d'évacuation (10) conçu pour retirer l'air dudit espacement étanche à l'air défini entre ladite plaque transparente (6) et ladite feuille élastique (1),
un moyen racleur (11) conçu pour être déplacé sur ladite feuille élastique,
un moyen d'entraînement (40) conçu pour déplacer ledit moyen racleur (11) dans un premier sens à partir d'une position de départ à une première vitesse initiale,
un moyen de pression (17) conçu pour appuyer vers ladite plaque transparente (6) ledit moyen racleur (11) pendant ledit déplacement de ce dernier, appuyant, de ce fait ladite feuille de caoutchouc (1) contre ladite plaque transparente (6) de façon à déplacer, en force, l'air à enlever dudit espacement étanche à l'air,
ledit appareil étant caractérisé en ce que :
ledit moyen d'entraînement (40) comprend un moyen de changement de vitesse (38) conçu pour changer la vitesse de déplacement dudit moyen racleur (11) pour une seconde vitesse, laquelle est inférieure à ladite première vitesse, lorsque ledit moyen racleur a atteint une position intermédiaire sur ladite feuille de caoutchouc (1).

2. Appareil d'impression par contact sous vide selon la revendication 1, dans lequel :
ledit espacement étanche à l'air communique avec ledit moyen d'évacuation (10) par l'intermédiaire d'un orifice d'évacuation d'air (9) qui est situé à l'opposé de ladite position de départ par rapport audit premier sens.

3. Appareil d'impression par contact sous vide selon la revendication 2, dans lequel :
ledit moyen d'entraînement (40) comprend un moyen pour déplacer ledit moyen de pression (17) dans ledit premier sens en même temps que ledit moyen racleur.

4. Appareil d'impression par contact sous vide selon la revendication 3, dans lequel ledit moyen racleur (11) comprend :
un rouleau racleur (11) conçu pour être mis en rotation en contact avec ladite feuille élastique (1).

5. Appareil d'impression par contact sous vide selon la revendication 4, dans lequel :
ledit moyen de changement de vitesse (38) comprend :
un moyen de détection (36) pour sortir un signal d'indication de position de bord indiquant la position, par rapport audit premier sens, d'un bord particulier dudit film original (31) ou de ladite matière photosensible (32),
un moyen pour détecter la position dudit rouleau racleur (11) et pour sortir un signal de position de racleur,
et
un premier moyen de production de signal sensible audit signal d'indication de position de racleur, pour produire un premier signal prédéterminé lorsque ledit rouleau racleur (11) atteint, pendant ledit déplacement de ce dernier, une position précédant ladite position de bord d'une distance prédéterminée dans ledit premier sens, et
ledit moyen de changement (38) est conçu pour changer la vitesse de déplacement dudit moyen de pression depuis ladite première vitesse vers ladite seconde vitesse inférieure à ladite première vitesse, en réponse audit premier signal.

6. Appareil d'impression par contact sous vide selon la revendication 5, dans lequel :
ledit moyen de changement de vitesse (38) comprend, de plus, un moyen pour produire un second signal prédéterminé après un temps prédéterminé à partir de la sortie dudit premier signal,
et
est conçu pour modifier la vitesse dudit moyen de pression à une troisième vitesse supérieure à ladite seconde vitesse, en réponse audit second signal.

7. Appareil d'impression par contact sous vide selon la revendication 6, dans lequel :
ladite seconde vitesse est nulle.

8. Appareil d'impression par contact sous vide selon la revendication 5, comprenant, de plus :
une table (4) ayant une ouverture rectangulaire dans le centre, ladite feuille élastique (1) étant étendue sur une surface particulière de celle-ci, recouvrant ladite ouverture dans le sens de l'utilisation normale de l'appareil, ladite table étant sensiblement horizontale,
un cadre supérieur (7) attaché, de façon à pouvoir tourner, à un bord particulier de ladite table (4), pour recouvrir la surface de ladite table (4),
ledit cadre supérieur (7) ayant une ouverture (46) dans sa partie centrale, et ladite plaque transparente (1) étant fixée au côté inférieur dudit cadre supérieur (7) et un joint d'étanchéité à l'air (2) est disposé autour de ladite ouverture (46) dudit cadre supérieur (3), et pour définir ledit espacement étanche à l'air à l'intérieur de ladite plaque transparente (1) et de ladite feuille élastique (1) lorsque ledit cadre supérieur (7) recouvre ladite table (4).

9. Appareil d'impression par contact sous vide selon la revendication 8, comprenant, de plus :
un moyen de support disposé sous l'ouverture de ladite table (4), pour supporter, à partir du dessous, une partie de ladite feuille élastique (1) où ladite matière photosensible (32) et ledit film original (31) sont placés dessus.

10. Appareil d'impression par contact sous vide selon la revendication 9, dans lequel :
ledit moyen de support comprend :
une plaque de support (16) pour être en contact avec la surface la plus inférieure de ladite feuille élastique (1),
un mécanisme de support (90) pour supporter ladite plaque de support (16), de façon à pouvoir bouger verticalement, et supportant de façon stable ladite plaque de support (16) au moins lorsque ladite plaque de support (16) vient en contact avec la surface inférieure de ladite feuille élastique (1), et
un moyen d'entraînement de plaque de support (91) pour entraîner ledit mécanisme de support (90) pour élever et abaisser ladite plaque de support (16).

11. Appareil d'impression par contact sous vide selon la revendication 5, dans lequel :
des graduations (34) sont formées sur ladite feuille élastique (1) et comprenant, de plus :
un moyen d'entrée pour entrer une valeur lue desdites graduations (34) qui est indicative d'une position de bord arrière dudit film original ou de ladite matière photosensible (32) dans ledit premier sens lorsque ledit film original (31) et ladite matière photosensible (32) sont placés sur ladite feuille élastique (1), et
un moyen pour produire ledit signal indiquant la position de bord sur la base de la valeur entrée dans ledit moyen d'entrée.

12. Appareil d'impression par contact sous vide selon la revendication 5, dans lequel :
ledit moyen de détection (36) comprend :
un moyen de détection disposé, de façon mobile, le long dudit premier sens sur ladite plaque transparente (6) pour détecter, de façon optique, une position de bord arrière par rapport audit premier sens, de ladite matière photosensible (32) ou film original (31) placé sur ladite feuille élastique (1), en utilisant une lumière ayant une longueur d'onde différente de la plage de longueur d'onde sensible à la lumière de ladite matière photosensible (32).

13. Appareil d'impression par contact sous vide selon la revendication 1, dans lequel, dans le sens de l'utilisation normale de l'appareil, ladite feuille élastique (1) est sensiblement horizontale et comprend, de plus, un dispositif de support de feuille élastique pour supporter la surface inférieure de ladite feuille élastique (1) étendue sur une ouverture (46) formée dans un cadre (26), pour empêcher ladite feuille élastique (1) de se déformer vers le bas, comprenant :
une plaque de support (16) pour être en contact avec la surface inférieure de ladite feuille élastique, ladite plaque de support ayant un premier bord et un second bord opposé audit premier bord,
une paire de premiers moyens formant levier (72), chacun ayant une extrémité attachée, de façon mobile, sous ledit premier bord, lesdits premiers leviers respectifs pouvant tourner dans différents plans parallèles les uns aux autres et établissant des intersections avec ladite surface inférieure,
une paire de seconds moyens formant levier (75), chacun ayant une extrémité attachée audit cadre (26) sous ladite plaque de support (16), de façon rotative dans le plan de rotation desdits premiers moyens respectifs formant levier (72), et l'autre extrémité étant en contact coulissant avec la surface inférieure de ladite plaque de support (16) sur le côté dudit second bord, attachée audit premier moyen formant levier respectif (72) de façon à traverser ce dernier, la surface supérieure de ladite plaque de support (16) étant maintenue en parallèle à la surface inférieure de ladite feuille élastique (1), et
un moyen d'entraînement en synchronisation (73, 91) pour maintenir les autres extrémités respectives de ladite paire des premiers moyens formant levier (72) et pour déplacer lesdites autres extrémités en synchronisation au moins dans le premier sens reliant ledit premier bord et ledit second bord.

14. Appareil d'impression par contact sous vide selon la revendication 13, dans lequel :
lesdits premiers moyens formant levier (72) et lesdits seconds moyens formant levier (75) ont la même longueur.

15. Appareil d'impression par contact sous vide selon la revendication 14, dans lequel :
lesdits premiers et seconds moyens formant levier (72, 75) sont en prise les uns avec les autres au niveau de leurs points médians respectifs (70).

16. Appareil d'impression par contact sous vide selon la revendication 15, comprenant, de plus :
un rouleau de guidage (76) supporté par les autres extrémités respectives desdits seconds moyens formant levier (75) et roulant le long de la surface inférieure de ladite plaque de support (16).

17. Appareil d'impression par contact sous vide selon la revendication 16, dans lequel :
l'extrémité particulière de chacun desdits premiers moyens formant levier (72) est située dans la même position de ladite plaque de support (16) par rapport audit premier sens.

18. Appareil d'impression par contact sous vide selon la revendication 17, dans lequel :
ledit moyen d'entraînement en synchronisation comprend
une tige formant arbre (73) reliant les autres extrémités respectives de ladite paire de premiers moyens formant levier, et
un moyen d'entraînement de tige formant arbre (91) pour entraîner ladite tige formant arbre (73) en parallèle à la surface inférieure de ladite plaque de support et le long dudit premier sens.

19. Appareil d'impression par contact sous vide selon la revendication 18, comprenant, de plus :
un moyen de mise en oeuvre (85) pour mettre en oeuvre ladite tige formant arbre (73) normalement dans un sens depuis ledit second bord jusqu'au dit premier bord.

20. Appareil d'impression par contact sous vide selon la revendication 19, dans lequel :
ledit moyen de mise en oeuvre (85) comprend un ressort d'extension à boudin (85) ayant une extrémité fixée audit cadre (76) sur le côté dudit premier bord et l'autre extrémité étant fixée à ladite tige formant arbre (73).

21. Appareil d'impression par contact sous vide selon la revendication 20, dans lequel :
ledit moyen d'entraînement de tige formant arbre (91) comprend
un premier écrou (78) venant en prise avec ladite tige formant arbre (73),
un premier arbre fileté (80) disposé le long dudit premier sens au voisinage de ladite tige formant arbre (73) et venant en prise avec ledit premier écrou (73), et
un moyen d'entraînement en rotation (113, 83) pour tourner ledit premier arbre fileté (80) le long de son axe.

22. Appareil d'impression par contact sous vide selon la revendication 21, dans lequel :
ledit moyen d'entraînement en rotation (91) comprend un moteur (43) fixé audit cadre et ayant son axe de rotation relié audit premier arbre fileté (80).

23. Appareil d'impression par contact sous vide selon la revendication 22, dans lequel :
ledit moyen d'entraînement de tige formant arbre (91) comprend de plus
un second écrou (78) venant en prise avec ladite tige formant arbre (73),
un second arbre fileté (80) disposé en parallèle audit premier arbre fileté (80) et venant en prise avec ledit second écrou (78), et
un moyen de transmission (82) pour transmettre la rotation dudit premier arbre fileté (80) audit second arbre fileté (80).

24. Appareil d'impression par contact sous vide selon la revendication 16, comprenant, de plus :
des moyens formant rail de guidage (77) disposés le long d'un trajet de roulage dudit rouleau de guidage (76) sous ladite plaque de support (14), pour guider le roulage dudit rouleau de guidage (76) et pour définir un espacement dudit rouleau de guidage (76) à partir de la surface inférieure de ladite plaque de support (16).

25. Procédé de contact sous vide de contact intime d'une plaque transparente (6) et d'une feuille élastique (1) en retirant l'air provenant d'un espacement étanche à l'air défini par ladite plaque transparente (6) et ladite feuille élastique (1) dans un appareil d'impression par contact sous vide selon l'une quelconque des revendications précédentes,
le procédé comprenant les étapes suivantes :
placement dudit film original (31) et de ladite matière photosensible (32), de façon qu'ils se chevauchent, entre ladite plaque transparente (6) et ladite feuille élastique (1),
enlèvement de l'air entre ladite plaque transparente (6) et ladite feuille élastique (1),
déplacement dudit moyen racleur (11, 40) à une première vitesse prédéterminée, et
changement de la vitesse dudit moyen racleur (11, 40) pendant le déplacement dudit moyen racleur (11, 40) à partir de ladite première vitesse jusqu'à une seconde vitesse inférieure à ladite première vitesse.

26. Procédé de contact sous vide selon la revendication 25, comprenant, de plus, l'étape suivante :
changement de la vitesse dudit moyen racleur (11, 40) pendant le déplacement de ce dernier à ladite seconde vitesse à une troisième vitesse supérieure à ladite seconde vitesse.

27. Procédé de contact sous vide selon la revendication 26, comprenant, de plus, l'étape suivante :
détection d'une position de bord la plus en arrière dudit film original ou de ladite matière photosensible (32) le long du sens de déplacement dudit moyen racleur (11, 40), et
changement de la vitesse dudit moyen racleur (11, 40) pour ladite seconde vitesse lorsque ledit moyen racleur (11, 40) atteint une position précédant ladite position de bord la plus en arrière d'une distance prédéterminée.

28. Procédé de contact sous vide selon la revendication 27, dans lequel :
ladite première vitesse est supérieure à 200 mm/s.

29. Procédé de contact sous vide selon la revendication 28, dans lequel :
ladite seconde vitesse est égale à 15 mm/s ou moins.

30. Procédé de contact sous vide selon la revendication 29, dans lequel :
ladite seconde vitesse est égale à 0 mm/s.

31. Procédé de contact sous vide selon la revendication 30, dans lequel :
ladite troisième vitesse est supérieure à 200 mm/s.
